# EUROPEAN PATENT SPECIFICATION

(11) **EP 3 079 540 B1**
(45) Date of publication and mention of the grant of the patent: **16.08.2017**
(21) Application number: 14828526.5
(22) Date of filing: 01.12.2014
(51) Int. Cl.: A47J 37/06, A47J 37/08

(54) **TOASTER AND METHOD FOR CONTROLLING SAID TOASTER**
TOASTER UND VERFAHREN ZUR STEUERUNG DIESES TOASTERS
GRILLE-PAIN ET PROCÉDÉ DE COMMANDE DUDIT GRILLE-PAIN

(30) Priority: 11.12.2013 IT TO20131012
(43) Date of publication of application: 19.10.2016
(73) Proprietor: Whirlpool EMEA S.p.A, 20016 Pero (MI) (IT)
(72) Inventor: PALMETO, Stefano, 21100 Varese (VA) (IT); RIDERELLI BELLI, Marcello, 60027 Osimo (AN) (IT); GIARDINI, Francesco, 60044 Fabriano (AN) (IT)
(74) Representative: Baroni, Matteo
(86) International application number: PCT/IB2014/066474
(87) International publication number: WO 2015/087196

(56) References cited:
- WO-A1-2013/155574
- US-A1- 2002 069 764
- US-A1- 2006 201 333
- US-A1- 2011 132 895

## Description

The present invention relates to a toaster and to a method for controlling said toaster.

As is known, a toaster includes one or more heating compartments, into which foods to be heated are inserted. Said foods may comprise, for example, one or more slices of bread; in case of two slices of bread, other foods can be placed in between, such as, for example, sliced salami and ham, cheese, vegetables, etc.

A toaster is also known which additionally comprises one or more grids for centering the food within said heating compartments. Heating elements are also associated with the heating compartments, typically consisting of electric resistors that, when run by electric current, transfer heat to the foods inserted in the heating compartments.

In some cases accessory pliers can be used, which facilitate the insertion and extraction of the foods from the heating compartments.

Known toasters make available to the user one or more heating programs, each one characterized by a respective time duration. By means of a suitable selector, the user can choose the preferred program as a function of the type of food to be heated. Document US2002069764 (A1) relates to a cooking apparatus which includes a food support member for supporting a food item thereon; the cooking apparatus further includes upper and lower housings disposed above and beneath the food support member; the upper and lower housings include an upper and lower heating member respectively; the cooking apparatus further includes a control unit which provides for cyclical heating by varying the heating members on and off to cook the food item located on the food support member.

Document WO2013155574 (A1) relates to a cooking apparatus comprising at least one baking mould with a first and a second heating elements; and a control system configured to control the power supply to the first and the second heating element, wherein the control system is configured to provide the first heating element with a first electric power, while the second heating element is provided with a second electric power which differs from the first electric power, wherein the first and the second electric power lie in a range from zero to a determined maximum electric power. Document US2006201333 (A1) relates to a waffle maker haiving upper and lower baking plates each of which is powered with at least one heating element for baking waffle; a power control unit responds to a temperature sensing unit to control power applied to the heaters and to maintain the heating plates both before and after each baking cycle at a manually pre-selected temperature; a manually adjustable timer controls the duration of the baking cycle.

Document US2011132895 (A1) relates to a a cooking appliance which includes a lower casing, a lower food-contacting heating plate, and an upper bell-shaped body which is movably mounted on the lower casing so as to be movable to and from a closed position; an upper food-contacting heating plate is located inside the bell-shaped body so as to be positioned, when the bell-shaped body is in the closed position, over the lower heating plate; the upper food-contacting heating plate is connected to the bell-shaped body to move freely inside the bell-shaped body.

The Applicant, however, has noticed that known toasters cannot ensure optimal results for some food categories, such as, for example, toasts: by selecting short programs one can obtain a satisfactory browning of the outer surface of the toast, but the inside will not be heated appropriately; by selecting longer programs, the inside of the toast will be heated appropriately, but the outer surfaces will get too hot or may even burn.

The Applicant has sensed that this problem is due to the fact that, in short programs, the heat is not allowed sufficient time to penetrate the innermost layers of the toast, which will not get sufficiently hot.

The Applicant has then thought that, by setting a heating program including a suitable series of activations/deactivations of the heating means, the heat can be allowed to reach also the innermost layers of the food without causing any undesired effects, such as burning, on the outermost surfaces.

One idea at the basis of the present invention is to provide a toaster, equipped with at least one heating compartment and at least one heating element associated with said heating compartment, with a control unit; the latter is configured for executing a main heating program comprising a succession of activations, separated by respective deactivations, of said at least one heating element.

According to another aspect, the invention relates to a method for controlling a toaster, said toaster comprising at least one heating element adapted to heat food arranged in a heating compartment, said method comprising the execution of a main heating program comprising a plurality of activations and deactivations of said at least one heating element.

The Applicant believes that, in this manner, the heat received by the food during the activation phases of the heating element can propagate and penetrate into even the innermost layers of the food itself, in particular by exploiting the deactivation phases, without the outer surfaces getting excessively dry or burned.

Said control unit is configured for executing a plurality of heating programs, said plurality of heating programs comprising said main heating program.

Said plurality of heating programs comprise:
- a first group of heating programs, in each one of which said at least one heating element is activated with substantial continuity for the whole duration of the program;
- a second group of heating programs, in each one of which said at least one heating element is activated/deactivated for a plurality of times during the execution of the program, said main heating program being comprised in said second group.

Said toaster further comprises a user interface allowing a user to select one heating program among said plurality of heating programs.

Said user interface comprises a switching module configured for switching said toaster between a first operating condition, wherein it executes programs of said first group, and a second operating condition, wherein it executes programs of said second group. Preferably, said user interface further comprises a selection module configured for allowing a selection among the programs of the first group when said toaster is in the first operating condition, and for allowing a selection among the programs of the second group when said toaster is in the second operating condition.

Every time it is turned on, said toaster preferably set itself into the first operating condition.

Preferably, said selection module has a plurality of options for the selection of said heating programs.

Preferably, at least one of said options corresponds to a program of the first group when said toaster is in the first operating condition, and to a program of the second group when said toaster is in the second operating condition.

Preferably, said main heating program comprises a plurality of activations of said at least one heating element, each one having a duration of 40 seconds to 50 seconds, each pair of consecutive activations being separated by one deactivation having a duration of 10 seconds to 20 seconds.

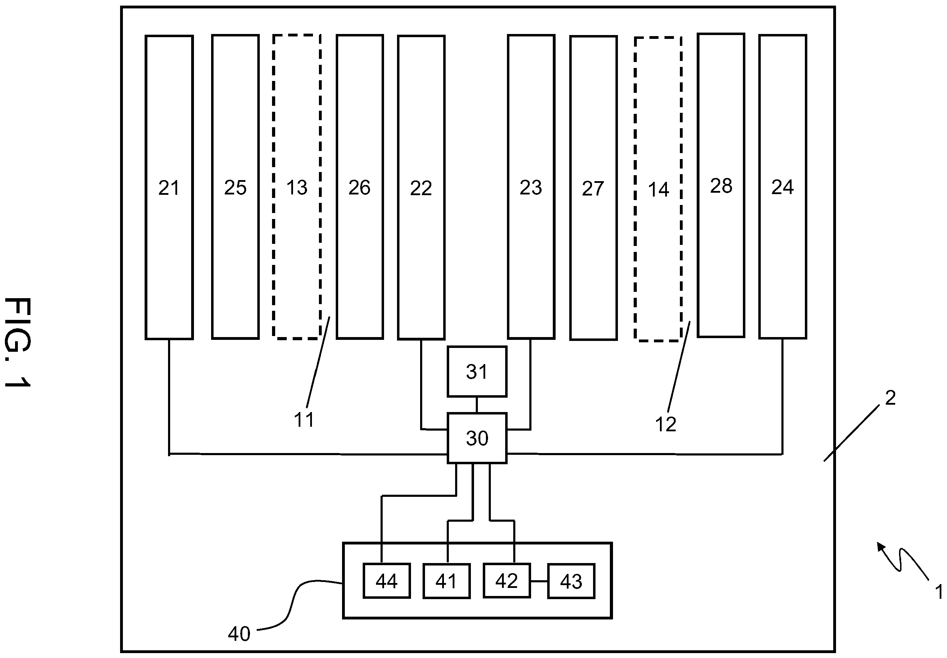

Further features and advantages will become more apparent from the following description of a preferred and non-limiting embodiment of the invention. Said description refers to the annexed Figure 1, which is also supplied by way of exemplificative, and hence non-limiting, example, and which shows a representative block diagram of a toaster in accordance with the present invention.

The drawings show different aspects and embodiments of the present invention and, where appropriate, similar structures, components, materials and/or elements are designated in the various drawings by the same reference numerals.

### [DETAILED DESCRIPTION OF THE INVENTION]

With reference to the annexed drawings, reference numeral 1 designates as a whole a toaster in accordance with the present invention.

The toaster 1 comprises, first of all, a heating compartment 11, 12, into which the food 13, 14 to be heated is positioned.

In the preferred embodiment, the toaster 1 comprises two heating compartments 11, 12, each one adapted to receive a respective food 13, 14.

The food 13, 14 may comprise, by way of example, slices of bread, toasts, sandwiches, etc.

Each one of the compartments 11, 12 may have a substantially parallelepiped shape, i.e. a shape suitable for housing, with some clearance allowing comfortable insertion and extraction, a slice of bread or a couple of slices of bread between which at least one other food is interposed (toast/sandwich).

The toaster 1 further comprises at least one heating element 21-24, associated with the at least one heating compartment 11, 12 and adapted to heat the food 13, 14 contained in said at least one compartment.

For the purpose of positioning the food 13, 14 correctly, each heating compartment 11, 12 can be conveniently associated with a respective positioning structure. Preferably, each positioning structure comprises a pair of centering grids 25, 26; 27, 28. Said grids are preferably movable to allow the food 13, 14 to be centered properly.

In the preferred embodiment, each heating compartment 11, 12 is associated with a respective pair of heating elements 21, 22; 23, 24.

Preferably, each heating element 21-24 is integral with the frame 2 of the toaster 1.

Each heating element 21-24 can advantageously be implemented as an electric resistor, e.g. a coil-shaped one, and positioned on one side of the heating compartment 11, 12. Preferably, the heating elements 21, 22; 23, 24 of each pair are located on opposite sides of the respective heating compartment 11, 12, in order to heat both surfaces of the food 13, 14.

When food must be heated, the at least one heating element 21-24 is preferably run by a predetermined current, so as to generate the necessary heat and transfer it to the food positioned in the respective heating compartment 11, 12.

In accordance with the invention, the toaster 1 further comprises a control unit 30 associated with the at least one heating element 21-24.

The control unit 30 acts upon said at least one heating element 21-24 in order to execute at least one main heating program, the latter comprising a succession of activations/deactivations of the at least one heating element 21-24.

In other words, the main heating program will activate and deactivate the at least one heating element 21-24 multiple times, so that, given a certain total duration of the main heating program, the total on time of the at least one heating element 21-24 will be significantly shorter than said duration and will be distributed in a predetermined manner over the duration of the program.

By way of example only, the main heating program may comprise a plurality of activations of the at least one heating element 21-24, each one having a duration of 40 seconds to 50 seconds, each pair of consecutive activations being separated by one deactivation having a duration of 10 seconds to 20 seconds. The total duration of the program may be, for example, comprised between 190 seconds and 260 seconds, during which the at least one heating element 21-24 is activated 4 times, i.e. it is activated for a total time between 160 seconds and 200 seconds.

Preferably, when the heating compartment 11, 12 is associated with a pair of heating elements 21, 22; 23, 24, the succession of activations/deactivations in the main heating program is imposed on both of such heating elements. The control unit 30 is generally configured for executing, in addition to the main heating program, a plurality of heating programs.

In particular, said plurality of heating programs can be divided into two groups.

The heating programs of the first group provide for activating the at least one heating element 21-24 with substantial continuity, i.e. with no interruptions, for the whole duration of each program.

The programs of the second group, instead, provide for activating/deactivating the at least one heating element 21-24 for a plurality of times during the execution of each program.

The above-mentioned main heating program belongs to the second group.

The following table shows some examples of programs belonging to the second group: the first and third columns show some exemplary durations of periods of activation of the at least one heating element 21-24; the second and fourth columns show some exemplary durations of the respective periods of deactivation of the at least one heating element 21-24; and the fifth column shows the total duration of each program.

| ON | OFF | ON | OFF | Total |
|---|---|---|---|---|
| 55" | 30" | 55" | 30" | 2' 50" |
| 1' | 30" | 1' | 30" | 3' |
| 1' 10" | 30" | 1' 10" | 30" | 3' 20" |
| 1' 15" | 30" | 1' 15" | 30" | 3' 30" |
| 1' 20" | 32" | 1' 20" | 32" | 3' 44" |
| 1' 25" | 30" | 1' 25" | 30" | 3' 50" |

The toaster 1 further comprises a user interface 40 allowing a user to select one heating program among said plurality of heating programs. In particular, the user interface 40 comprises a switching module 41.

The switching module 41 is configured for switching the toaster 1 between a first and a second operating conditions.

In the first operating condition, the toaster 1 executes the programs of the first group.

In the second operating condition, the toaster 1 executes the programs of the second group.

In practice, the switching module 41 may be implemented as a push-button.

The user interface 40 preferably comprises a selection module 42, through which the user can select the specific program to be executed.

When the toaster 1 is in the first operating condition, the selection module 42 allows the selection of programs belonging to the first group.

When the toaster 1 is in the second operating condition, the selection module 42 allows the selection of programs belonging to the second group.

In practice, the selection module 42 may be implemented as an electromechanical selector, or as one or more push-buttons, possibly associated with a display.

Preferably, when the toaster 1 is in the first operating condition, the selection module 42 does not allow the selection of programs of the second group.

Preferably, when the toaster 1 is in the second operating condition, the selection module 42 does not allow the selection of programs of the first group.

In a preferred embodiment, the selection module offers the user a limited number of options as concerns the selectable programs: such a limited number is advantageously smaller than the sum of the number of programs of the first group and the number of programs of the second group.

In a preferred embodiment, the number of options made available by the selection module 42 is equal to the number of programs of the first group or the number of programs of the second group, whichever is greater.

Preferably, at least one option (e.g. a certain position of a selector) offered by the selection module 42 can have two meanings: if the toaster 1 is in the first operating condition, said option offered by the selection module 42 will correspond to a respective program of the first group; if the toaster 1 is in the second operating condition, the same option offered by the selection module 42 (e.g. the same position of the selector) will correspond to a respective program of the second group.

In particular, a plurality of options offered by the selection module 42 are associated with two different meanings, as described above, depending on the operating condition the toaster 1 is in.

Following the user's action upon the switching module 41, the latter will generate a corresponding signal for the control unit 30: thus, the latter will be able to correctly "interpret" the selection commands coming from the selection module 42.

In a preferred embodiment, the control unit 30 is associated with a respective memory 31, which is logically and/or physically divided into two portions: the first portion stores the characteristic parameters of the programs of the first group (typically the time duration thereof), whereas the second portion stores the characteristic parameters of the programs of the second group (e.g.: heating element on/off times, number of activations/deactivations, etc.).

As a function of the signal received from the switching module 41, the control unit 30 will select either the first or the second portion of the memory 31 in order to make the selection according to what has been entered through the selection module 42.

Merely by way of example, the memory 31 may contain three programs in the first portion (first group of heating programs) and three programs in the second portion (second group of heating programs).

The selection module 42 will, in any case, give the user the possibility of choosing from three programs; whether these will be the programs of the first group or the programs of the second group will be determined by the switching module 41, in particular by the signal that the latter will send to the control unit 30 for selecting either the first portion or the second portion of the memory 31.

When a user wants to select a certain program, e.g. of the second group, he/she will first check whether the toaster 1 is in the first or in the second operating condition.

If the toaster 1 is in the first operating condition, the user will, through the switching module 41, switch the toaster 1 into the second operating condition.

If the toaster 1 is in the second operating condition (possibly after the user's intervention through the switching module 41, as described above), the user will be allowed to select the main heating program among the various programs included in the second group.

Note that, in general, the number of programs in the first group may be different from the number of programs in the second group.

In the preferred embodiment, every time the toaster 1 is turned on, it will normally set itself into the first operating condition.

In other words, the toaster 1 is so configured as to execute, by default, the heating programs of the first group, irrespective of the operating condition the toaster was in when it was last turned off.

Advantageously, the user interface 40 further comprises a signalling device 43 configured for informing the user about the operating condition that the toaster 1 is in.

In one embodiment, the switching module 41 comprises a key or a selector; the signalling device 43 may comprise a mechanical structure holding said key or selector in different positions depending on whether the toaster 1 is in the first or in the second operating condition.

In a different embodiment, the signalling device 43 may be a luminous one (e.g. comprising one or more signalling LEDs) and/or may comprise or use a display (not shown), whereon indications can be shown about the operating condition of the toaster 1. In this embodiment, the signalling device 43 may be directly activated by the switching module 41, or it may be connected to the control unit 30, from which it will derive the information to be presented to the user.

In one embodiment, the user interface 40 further comprises an auxiliary selection device 44 allowing the user to use just one of the two heating compartments 11, 12, or both.

The heating program selected through the selection module 41 will then be executed by the heating elements 21-24 associated with the selected compartment(s) via the auxiliary selection device 44.

The invention offers significant advantages.

First of all, by executing programs such as, for example, the above-mentioned main heating program, it is possible to optimally heat both the outer surfaces and the innermost layers of the food inserted in the heating compartment.

This significantly improves the quality of the food provided to the user.

Furthermore, the toaster according to the invention has a simple structure which can be manufactured easily and economically.

In particular, it should be noted that, in one of the preferred embodiments, the selection from the innovative programs proposed herein (i.e. programs comprising a plurality of activations/deactivations of the heating elements within the same program) can be made by using the same selection module used for selecting programs of the type known in the art, i.e. the programs of the above-mentioned first group.

## Claims

1. A toaster comprising:
- at least one heating compartment (11, 12), in which the food to be heated (13, 14) is positioned;
- at least one heating element (21-24), associated with said at least one heating compartment (11, 12) and adapted to heat the food (13, 14) positioned in said at least one heating compartment (11, 12);
- a control unit (30), acting upon said at least one heating element (21-24) and configured for executing a main heating program comprising a succession of activations separated by respective deactivations of said at least one heating element (21-24), wherein said control unit (30) is configured for executing a plurality of heating programs, said plurality of heating programs comprising said main heating program, wherein said plurality of heating programs comprise:
- a first group of heating programs, in each one of which said at least one heating element (21-24) is activated with substantial continuity for the whole duration of the program;
- a second group of heating programs, each one of which performing a plurality of activations, separated by respective deactivations, of said at least one heating element (21-24) during the execution of the program, said main heating program being comprised in said second group;
said toaster further comprising a user interface (40) allowing a user to select one heating program among said plurality of heating programs, **characterized in that** said user interface (40) comprises a switching module (41) configured for switching said toaster (1) between a first operating condition, wherein it executes programs of said first group, and a second operating condition, wherein it executes programs of said second group.

2. A toaster according to claim 1, wherein said user interface further comprises a selection module (42) configured for allowing a selection among the programs of the first group when said toaster (1) is in the first operating condition, and for allowing a selection among the programs of the second group when said toaster (1) is in said second operating condition.

3. A toaster according to claim 2, wherein said selection module (42) offers a plurality of options for the selection of said heating programs, wherein at least one of said options corresponds to a program of the first group when said toaster (1) is in the first operating condition, or to a program of the second group when said toaster (1) is in the second operating condition.

4. A toaster according to any one of claims 1 to 3, wherein, when turned on, said toaster (1) normally starts in the first operating condition.

5. A toaster according to any one of claims 1 to 4, wherein said user interface (40) comprises a signalling device (43) configured for signalling to the user the operating condition in which the toaster (1) is.

6. A toaster according to any one of the preceding claims, wherein said main heating program comprises a plurality of activations of said at least one heating element, each one having a duration of 40 seconds to 50 seconds, each pair of consecutive activations being separated by one deactivation having a duration of 10 seconds to 20 seconds.

7. A method for controlling a toaster (1), said toaster (1) comprising at least one heating element (21-24) adapted to heat food (13, 14) arranged in at least one heating compartment (11, 12), said method comprising the execution of a main heating program comprising a succession of activations separated by respective deactivations of said at least one heating element (21-24), and further comprising the execution of a plurality of heating programs, wherein said plurality of heating programs comprise:
- a first group of heating programs, in each one of which said at least one heating element (21-24) is activated with substantial continuity for the whole duration of the program;
- a second group of heating programs, each one of which performing a plurality of activations, separated by respective deactivations, of said at least one heating element (21-24) during the execution of the program, said main heating program being comprised in said second group;
said method further comprising selecting one heating program among said plurality of heating programs, **characterized in that** said method comprises switching said toaster (1) between a first operating condition, wherein it executes programs of said first group, and a second operating condition, wherein it executes programs of said second group.

## Patentansprüche

1. Toaster umfassend:
- mindestens ein Heizfach (11, 12), in dem die zu erwärmende Nahrung (13, 14) positionierbar ist;
- mindestens ein Heizelement (21-24), das mit dem mindestens einen Heizfach (11, 12) verbunden und eingerichtet ist, die Nahrung (13, 14), die in dem mindestens einen Heizfach (11, 12) positioniert ist, zu erwärmen;
- eine Steuereinheit (30), die auf das mindestens eine Heizelement (31-24) einwirkt und eingerichtet ist, ein Hauptheizprogramm, das eine Folge von Aktivierungen, getrennt durch entsprechende Deaktivierungen, des mindestens einen Heizelements (21-24) umfasst, wobei die Steuereinheit (30) eingerichtet ist, mehrere Heizprogramme auszuführen, wobei die mehreren Heizprogramme das Hauptheizprogramm umfassen, wobei die mehreren Heizprogramme umfassen:
- eine erste Gruppe von Heizprogrammen, bei jedem derer jeweils eines der mindestens einen Heizelemente (21-24) mit im Wesentlichen Kontinuität für die gesamte Dauer des Programms aktiviert wird;
- eine zweite Gruppe von Heizprogrammen, bei jedem derer jeweils mehrere Aktivierungen, getrennt durch entsprechende Deaktivierungen, des mindestens einen Heizelements (21-24) während der Ausführung des Programms ausgeführt wird, wobei das Hauptheizprogramm in der zweiten Gruppe enthalten ist;
der Toaster ferner eine Benutzerschnittstelle (40) umfasst, die es einem Benutzer erlaubt, ein Heizprogramm aus den mehreren Heizprogrammen auszuwählen, **dadurch gekennzeichnet, dass** die Benutzerschnittstelle (40) ein Schaltmodul (41) umfasst, das eingerichtet ist, den Toaster zwischen einem ersten Betriebszustand, bei dem er Programme der ersten Gruppe ausführt, und einem zweiten Betriebszustand, bei dem er Programme der zweiten Gruppe ausführt, umzuschalten.

2. Toaster nach Anspruch 1, wobei die Benutzerschnittstelle ferner ein Auswahlmodul (42) umfasst, das eingerichtet ist, eine Auswahl aus den Programmen der ersten Gruppe, wenn der Toaster (1) in dem ersten Betriebszustand ist, zu erlauben, und eine Auswahl aus den Programmen der zweiten Gruppe, wenn der Toaster (1) in dem zweiten Betriebszustand ist, zu erlauben.

3. Toaster nach Anspruch 2, wobei das Auswahlmodul (42) mehrere Optionen zum Auswählen der Heizprogramme bietet, wobei mindestens eine der Optionen zu einem Programm der ersten Gruppe, wenn der Toaster in dem ersten Betriebszustand ist, korrespondiert oder zu einem Programm der zweiten Gruppe, wenn der Toaster in dem zweiten Betriebszustand ist.

4. Toaster nach einem der Ansprüche 1 bis 3, wobei der Toaster (1) normal in dem ersten Betriebszustand startet, wenn er eingeschaltet wird.

5. Toaster nach einem der Ansprüche 1 bis 4, wobei die Benutzerschnittstelle (40) eine Signaleinrichtung (43) umfasst, die eingerichtet ist, dem Benutzer den Betriebszustand, in dem der Toaster (1) ist, zu signalisieren.

6. Toaster nach einem der vorhergehenden Ansprüche, wobei das Hauptheizprogramm mehrere Aktivierungen des mindestens einen Heizelements umfasst, die jeweils eine Dauer von 40 bis 50 Sekunden umfasst, jedes Paar von aufeinanderfolgenden Aktivierungen durch eine Deaktivierung getrennt ist, die eine Dauer von 10 bis 20 Sekunden umfasst.

7. Verfahren zum Steuern eines Toasters (1), wobei der Toaster (1) mindestens ein Heizelement (21-24) umfasst, das eingerichtet ist, Nahrung (13, 14) zu erwärmen, die in mindestens einem Heizfach (11, 12) angeordnet ist, wobei das Verfahren das Ausführen mindestens eines Hauptheizprogramms umfasst, das eine Folge von Aktivierungen, die getrennt durch entsprechende Deaktivierungen des mindestens einen Heizelements (21-24) sind, und ferner das Ausführen von mehreren Heizprogrammen umfasst, wobei die mehreren Heizprogramme umfassen:
- eine erste Gruppe von Heizprogrammen, bei jedem derer jeweils eines der mindestens einen Heizelemente (21-24) mit im Wesentlichen Kontinuität für die gesamte Dauer des Programms aktiviert wird;
- eine zweite Gruppe von Heizprogrammen, bei jedem derer jeweils mehrere Aktivierungen, getrennt durch entsprechende Deaktivierungen, des mindestens einen Heizelements (21-24) während der Ausführung des Programms ausgeführt wird, wobei das Hauptheizprogramm in der zweiten Gruppe enthalten ist;
wobei das Verfahren ferner das Auswählen eines Heizprogramms aus den mehreren Heizprogrammen umfasst, **dadurch gekennzeichnet, dass** das Verfahren umfasst, den Toaster (1) zwischen einem ersten Betriebszustand, bei dem er Programme der ersten Gruppe ausführt, und einem zweiten Betriebszustand, bei dem er Programme der zweiten Gruppe ausführt, umzuschalten.

## Revendications

1. Grille-pain comprenant :
- au moins un compartiment chauffant (11, 12), dans lequel est positionné l'aliment à chauffer (13, 14) ;
- au moins un élément chauffant (21-24), associé audit au moins un compartiment chauffant (11, 12) et adapté pour chauffer l'aliment (13, 14) positionné dans ledit au moins un compartiment chauffant (11, 12) ;
- une unité de commande (30), agissant sur ledit au moins un élément chauffant (21-24) et configurée pour exécuter un programme de chauffage principal comprenant une succession d'activations séparées par des désactivations respectives dudit au moins un élément chauffant (21-24), dans lequel ladite unité de commande (30) est configurée pour exécuter une pluralité de programmes de chauffage, ladite pluralité de programmes de chauffage comprenant ledit programme de chauffage principal, dans lequel ladite pluralité de programmes de chauffage comprend :
- un premier groupe de programmes de chauffage, dans chacun desquels ledit au moins un élément chauffant (21-24) est activé avec une continuité substantielle pendant toute la durée du programme ;
- un second groupe de programmes de chauffage, dont chacun réalise une pluralité d'activations, séparées par des désactivations respectives, dudit au moins un élément chauffant (21-24) pendant l'exécution du programme, ledit programme de chauffage principal étant compris dans ledit second groupe ;
ledit grille-pain comprenant en outre une interface utilisateur (40) permettant à un utilisateur de sélectionner un programme de chauffage parmi ladite pluralité de programmes de chauffage, **caractérisé en ce que** ladite interface utilisateur (40) comprend un module de commutation (41) configuré pour faire commuter ledit grille-pain (1) entre une première condition de fonctionnement, dans laquelle il exécute des programmes dudit premier groupe, et une seconde condition de fonctionnement, dans laquelle il exécute des programmes dudit second groupe.

2. Grille-pain selon la revendication 1, dans lequel ladite interface utilisateur comprend en outre un module de sélection (42) configuré pour permettre une sélection parmi les programmes du premier groupe lorsque ledit grille-pain (1) est dans la première condition de fonctionnement, et pour permettre une sélection parmi les programmes du second groupe lorsque ledit grille-pain (1) est dans ladite seconde condition de fonctionnement.

3. Grille-pain selon la revendication 2, dans lequel ledit module de sélection (42) offre une pluralité d'options pour la sélection desdits programmes de chauffage, dans lequel au moins l'une desdites options correspond à un programme du premier groupe lorsque ledit grille-pain (1) est dans la première condition de fonctionnement, ou à un programme du second groupe lorsque ledit grille-pain (1) est dans la seconde condition de fonctionnement.

4. Grille-pain selon l'une quelconque des revendications 1 à 3, dans lequel, lorsqu'il est allumé, ledit grille-pain (1) démarre normalement dans la première condition de fonctionnement.

5. Grille-pain selon l'une quelconque des revendications 1 à 4, dans lequel ladite interface utilisateur (40) comprend un dispositif de signalisation (43) configuré pour signaler à l'utilisateur la condition de fonctionnement dans laquelle se trouve le grille-pain (1).

6. Grille-pain selon l'une quelconque des revendications précédentes, dans lequel ledit programme de chauffage principal comprend une pluralité d'activations dudit au moins un élément chauffant, chacune ayant une durée de 40 secondes à 50 secondes, chaque paire d'activations consécutives étant séparée par une désactivation ayant une durée de 10 secondes à 20 secondes.

7. Procédé de commande d'un grille-pain (1), ledit grille-pain (1) comprenant au moins un élément chauffant (21-24) adapté pour chauffer un aliment (13, 14) agencé dans au moins un compartiment chauffant (11, 12), ledit procédé comprenant l'exécution d'un programme de chauffage principal comprenant une succession d'activations séparées par des désactivations respectives dudit au moins un élément chauffant (21-24), et comprenant en outre l'exécution d'une pluralité de programmes de chauffage, dans lequel ladite pluralité de programmes de chauffage comprend :
- un premier groupe de programmes de chauffage, dans chacun desquels ledit au moins un élément chauffant (21-24) est activé avec une continuité substantielle pendant toute la durée du programme ;
- un second groupe de programmes de chauffage, dont chacun réalise une pluralité d'activations, séparées par des désactivations respectives, dudit au moins un élément chauffant (21-24) pendant l'exécution du programme, ledit programme de chauffage principal étant compris dans ledit second groupe ;
ledit procédé comprenant en outre la sélection d'un programme de chauffage parmi ladite pluralité de programmes de chauffage, **caractérisé en ce que** ledit procédé comprend la commutation dudit grille-pain (1) entre une première condition de fonctionnement, dans laquelle il exécute des programmes dudit premier groupe, et une seconde condition de fonctionnement, dans laquelle il exécute des programmes dudit second groupe.
